Europäisches Patentamt

European Patent Office

Office européen des brevets

(11) Veröffentlichungsnummer: **0 087 427**
**B1**

(12) EUROPÄISCHE PATENTSCHRIFT

(45) Veröffentlichungstag der Patentschrift:
**19.03.86**

(21) Anmeldenummer: **82902157.5**

(22) Anmeldetag: **08.07.82**

(86) Internationale Anmeldenummer:
**PCT/DE 82/00144**

(87) Internationale Veröffentlichungsnummer:
**WO 83/00832 (17.03.83 Gazette 83/7)**

(51) Int. Cl.⁴: **B 24 B 1/04**

(54) Verfahren zur Herstellung zylindrischer Körper durch Ultraschallbohren und Ultraschallbohrvorrichtung hierfür.

(30) Priorität: **28.08.81 DE 3134082**
**06.03.82 DE 3208196**

(43) Veröffentlichungstag der Anmeldung:
**07.09.83 Patentblatt 83/36**

(45) Bekanntmachung des Hinweises auf die Patenterteilung:
**19.03.86 Patentblatt 86/12**

(84) Benannte Vertragsstaaten:
**AT BE CH DE FR GB LI**

(56) Entgegenhaltungen:
**US - A - 2 774 193**
**US - A - 2 774 194**
**US - A - 2 813 377**
**US - A - 3 023 547**
**US - A - 3 091 060**
**US - A - 3 180 064**

(73) Patentinhaber: **Licentia Patent-Verwaltungs-GmbH, Theodor-Stern-Kai 1, D-6000 Frankfurt/Main 70 (DE)**
(84) Benannte Vertragsstaaten: **CH DE FR GB LI**

(73) Patentinhaber: **Schmieg, Rainer, König-Wilhelm-Strasse 5, D-7900 Ulm (DE)**
(84) Benannte Vertragsstaaten: **BE AT**

(72) Erfinder: **SCHMIEG, Rainer, König-Wilhelm-Strasse 5, D-7900 Ulm (DE)**

(74) Vertreter: **Schulze, Harald Rudolf, Dipl.-Ing., Licentia Patent-Verwaltungs-GmbH Theodor-Stern-Kai 1, D-6000 Frankfurt/Main 70 (DE)**

LIBER, STOCKHOLM 1986

## Beschreibung

Die Erfindung betrifft ein Verfahren zur Herstellung zylindrischer Körper aus einem Werkstück durch Ultraschallbohren nach dem Oberbegriff des Anspruchs i sowie eine Ultraschallbohrvorrichtung der im Oberbegriff des Patentanspruchs 4 angegebenen Art.

Ultraschallbohrvorrichtungen finden bevorzugten Einsatz zur Bearbeitung harter, spröder Werkstoffe. Dabei wird in einem Ultraschallgenerator die Schallenergie erzeugt und über einen Amplitudentransformator, einem sogenannten Bohrrüssel, der an seiner Spitze ein Werkstück trägt, zu dem zu bearbeitenden Werkstück übertragen. Bohrrüssel samt Werkzeug verführen beim Bohrvorgang Ultraschallschwingungen in Bohrrichtung, d.h. in Richtung des Werkzeugvorschubs bei fortschreitendem Bohrvorgang.

Der Bohrrüssel ist achsensymmetrisch aufgebaut und weist mit der Achse in Bohrrichtung. Die Zerspanung des Werkstücks erfolgt mit Hilfe einer Schleifmittelsuspension, deren Schleifmittelkörnchen im Bereich der Stirnfläche des Werkzeugs das Werkstück abtragen. Hierzu wird fortwährend Schleifmittelsuspension an die Bohrstelle gepumpt. Die abgetragenen Materialpartikel werden laufend mit der Schleifmittelsuspension fortgeschwemmt.

Aus der Firmenschrift der KLN Ultraschallgesellschaft zum Gerät "Diatron" (1972) ist beispielsweise eine Ultraschallvorrichtung mit einem aufgelöteten Rohrstück als zylindrisch hohlem Werkzeug bekannt, mit welchem flache, kreisrunde Scheiben aus einer Platte ausgebohrt werden können.

Eine weitere Ultraschallbohrvorrichtung ist aus der US-A- 2 774 194 bekannt, wo neben anderem ein plattenförmiges Werkzeug mit einer Mehrzahl zylindrischer Durchbrüche beschrieben ist. Dort ist auch angegeben, daß beim Bohrvorgang die Bohrplatte geringfügig in den Trägerkörper, auf dem das Werkstück befestigt ist, eingebohrt wird.

Beim Bohrvorgang erfolgt jedoch nicht nur ein Materialabtrag an der Stirnfläche des Werkzeugs, sondern durch vorbeiströmendes Schleifmittel auch an den Seitenflächen der zylindrischen Werkzeuglöcher, woraus die nach herkömmlichen Ultraschallbohrverfahren hergestellten Teile sich konisch verjüngen. Besonders bei sehr kleinen Teilen mit im Verhältnis zu ihrer Länge geringen Querabmessungen macht sich dies deutlich bemerkbar.

Derartige kleine Teile werden bisher durch mechanische Bearbeitungsverfahren, wie beispielsweise Schleifen oder Fräsen, hergestellt. Dies ist mit erheblichem Aufwand verbunden und birgt Fehler durch Verformungen beim Einspannen und bei spröden Materialien Bruchgefahr.

Der vorliegenden Erfindung liegt die Aufgabe zugrunde, ein Verfahren der eingangs genannten Art, welches die Herstellung zylindrischer Teile beliebigen Querschnitts, insbesondere kleiner Teile mit im Verhältnis zu ihrer Länge geringem Durchmesser mit hoher Genauigkeit bei geringem Aufwand ermöglicht, sowie eine zur Durchführung dieses Verfahrens geeignete Ultraschallbohrvorrichtung anzugeben.

Ein Verfahren zur erfindungsgemäßen Lösung dieser Aufgabe beschreibt der Anspruch 1. Besonders vorteilhafte Ausführungen und Weiterbildungen des Verfahrens können den Ansprüchen 2 und 3 entnommen werden. Die erfindungsgemäße Ultraschallbohrvorrichtung ist im Anspruch 4 beschrieben. Vorteilhafte Ausgestaltungen und Weiterbildungen sind in den Unteransprüchen 5 bis 15 enthalten.

Die Erfindung ist von ganz besonderem Vorteil bei der Herstellung sehr kleiner kreiszylindrischer Körper, die bisher in aufwendigen Arbeitsgängen durch Rundschleifen mit Diamantwerkzeug angefertigt werden. Beispielsweise können kreiszylindrische Körper kleinsten Durchmessers durch Verwendung einer Bohrplatte mit hexogonal dicht angeordneten Bohrungen in einem Arbeitsgang in kurzer Zeit mit hoher Genauigkeit in großer Zahl angefertigt werden. Die Bohrplatte weist über der Fläche des zu bearbeitenden Werkstücks eine möglichst hohe Anzahl parallel zur Arbeitsrichtung verlaufender Durchbrüche mit beliebigem Innenprofil auf, die nach sachgemäßer Bearbeitung ihr Negativ als fertiges Werkstück auf der Aufnahme stehen lassen.

Bei der Herstellung der zylindrischen Teile nach dem erfindungsgemäßen Verfahren erfolgt zwar auch noch ein seitlicher Abtrag, der aber über die gesamte Werkstücklänge gleichmäßig ist. Dazu trägt auch noch eine konstante Vorschubgeschwindigkeit, auch beim Einbohren in den Trägerkörper, bei. Durch die erfindungsgemäße Ausgestaltung der Ultraschallbohrvorrichtung ist eine optimale Schwingungsübertragung auf das Werkzeug möglich.

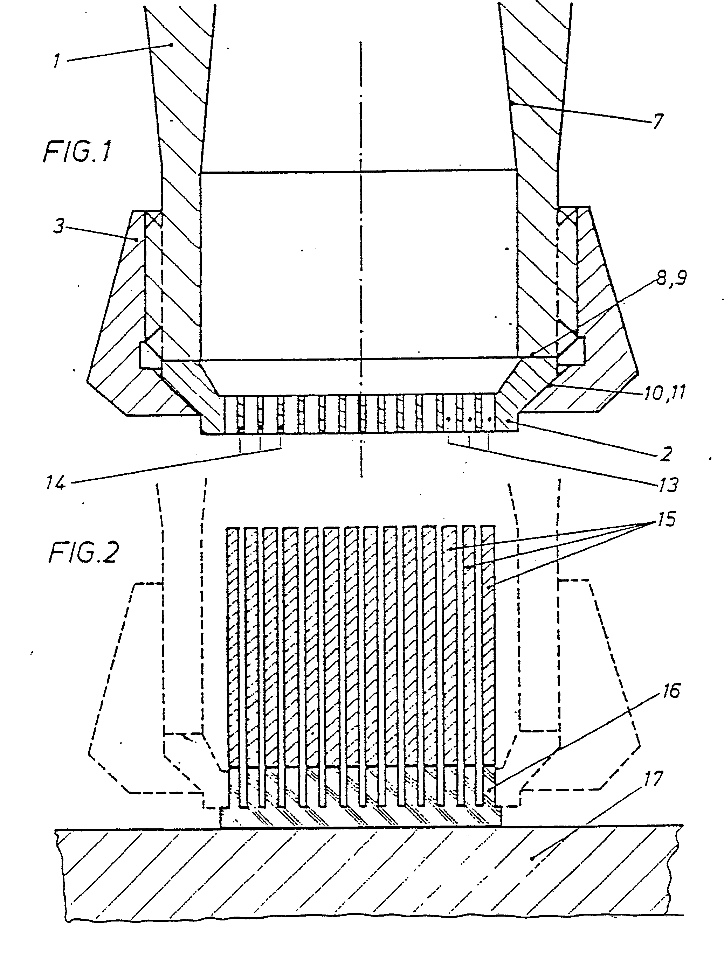

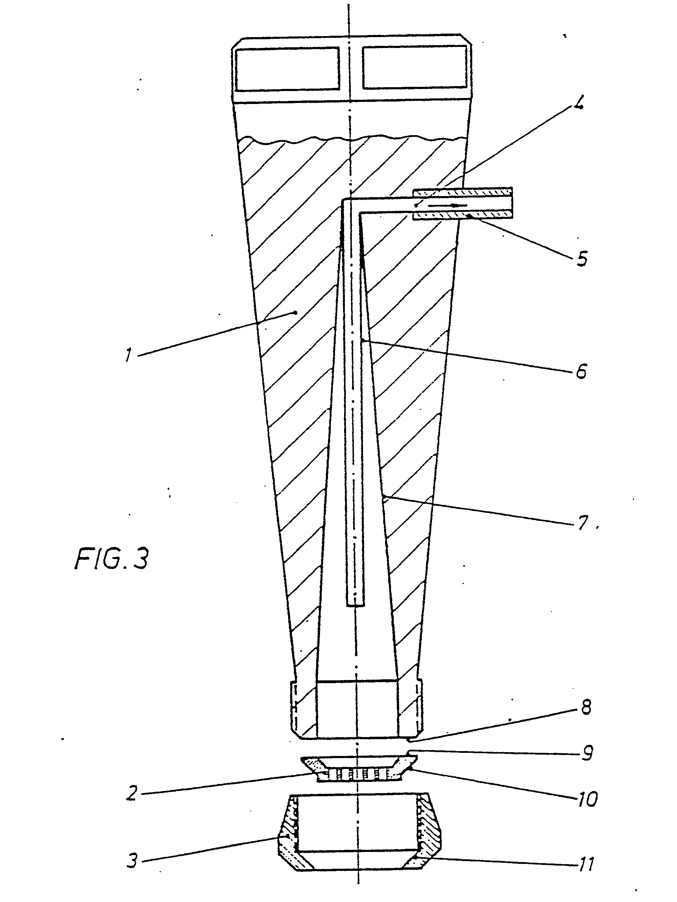

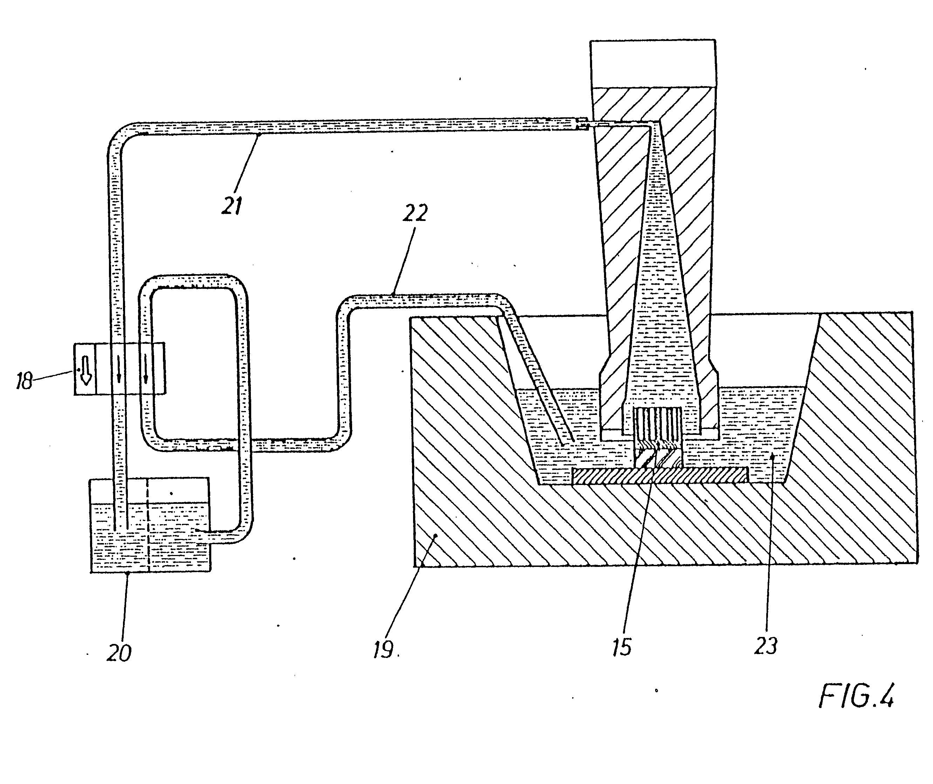

Die Erfindung ist im folgenden noch anhand der Abbildungen veranschaulicht. Dabei zeigt FIG. 1 in Schnittdarstellung die Spitze eines Bohrrüssels 1 mit einer Bohrplatte 2 als Bohrwerkzeug. In FIG. 2 ist ein mit einer Anordnung nach FIG. i bearbeitetes Werkstück 15 samt Werkstückaufnahmevorrichtungen 16, 17 dargestellt. Gestriehelt eingezeichnet in dieser FIG. 2 sind die Umrisse der Anordnung nach FIG. 1 in der Stellung bei Ab-schluß des Bearbeitungsvorganges. FIG. 3 zeigt eine Vorteilhafte Ausführungsform der Erfindung in zerlegtem Zustand. In FIG. 4 ist eine gesamte Ultraschallbohranordnung skizziert.

Das Werkzeug ist in FIG. 1 als eine Bohrplatte 2 mit einer Mehrzahl in Bohrrichtung ausgerichteter zylindrischer Durchgangslöcher 13 ausgeführt. Die Herstellung einer solchen Bohrplatte ist im Prinzip mit hoher Präzision in einfachen Arbeitsgängen möglich. Die Zerspanung des Werkstücks erfolgt im wesentlichen an der

Stimseite der Zwischenstege 14. Die Schallübertragung erfolgt über den massiVen Rand der Platte außer-halb des Bereichs der Durchgangslöcher. Die Länge der Durchgangslöcher, d. h. die Dicke der Bohrplatte kann gering gehalten werden und ist letztlich nur begrenzt durch die mechanische Stabilität des für die Bohrplatte verwendeten Materials. Insbesondere kann die Bohrplattendicke geringer sein als die Länge der herzustellenden Körper, wenn hinter der Bohrplatte noch ein Freiraum Verbleibt, in den der bearbeitete Teil des Werkstücks hineinragen kann. Bei Hohlwerkzeugen gebräuchlicher Art muß die Tiefe des Werkzeugs größer sein als die Länge des Werkstücks, bzw. die Tiefe der durchzufürenden Bohrung. Da das Werkzeug während seiner Standzeit durch Materialabtrag an der Stirnseite kürzer wird, müssen herkömmliche Werkzeuge im allgemeinen deutlich länger sein als die gewünchte Bohrungstiefe. Dabei kommt als ungünstige Erscheinung hinzu, daß durch Vorbeiströmendes Schleifmittel auch an den Längsseiten der Bohrung Material in merkbarem Umfange Vom Werkstück abgetragen wird, wodurch sich eine Konizität der Bohrung bzw. des bearbeiteten Werkstücks anstelle der angestrebten zylindrischen Form ergibt.

Durch die geringe Länge der Löcher 13 bzw. Zwischenstege 14 ist bei der erfindungsgemäß eingesetzten Bohrplatte dieser längsseitige Abtrag minimal. Bei der Werkstückbearbeitung mit der Bohrplatte fänrt die Stirnseite der Bohrplatte über die gesamte Werkzeuglänge. Ein seitlicher Abtrag findet nur jeweils auf einem kurzen Stück entsprechend der Bohrplattendicke statt. Ein ungleichmäßiger Abtrag kann durch die Erfindung ganz Vermieden werden. Der Freiraum hinter der Bohrplatte im Bohrrüssel ist hierzu so groß gewähl ist, daß das bearbeitete Werkstück vollständig hinter der Bohrplatte Platz findet (FIG. 2). Dadurch ist gewährleistet, daß an jeder Stelle über die gesamte Werkstücklänge der gleiche stirnseitige und längsseitige Abtrag durch die Stege 14 erfolgt ist. Hierzu sind die Vorrichtungen zur Ausrichtung und Halterung des zu bearbeitenden Werkstücks so ausgefürt, daß die Bohrplatte beim Bohren mit der gesamten Länge der Durchgangslöcher über das ganze Werkstück gefahren werden kann. In der FIG. 2 ist hierzu beispielsweise auf der Aufnahmeplatte 17 des Bohrgeräts ein Glaskörper 16 befestigt, der so hoch ist, daß die Bohrplatte ganz in den Glaskörper eindringen kann, ohne an der Aufnahmeplatte anzuschlagen. Auf diesem Glaskörper ist dann das zu bearbeitende werkstück, beispielsweise ein Sinterkörper, befestigt. Durch das vollständige Einbohren der Bohrplatte 2 in den Glaskörper 16 ist auch gewährleistet, daß das bearbeitete Werkstück 15 an den Kontaktstellen zum Glaskörper scharfe Kanten aufweist. Als Mittel zur Befestigung des Werkstück eignen sich alle Befestigungsmittel wie beispielsweise Wachs oder ähnliches, Von denen sich das bearbeitete Werkstück zerstörungsfrei durch physikalische oder chemische Methoden rückstandsfrei trennen läßt.

Das schwingende Bohrerkzug besteht normalerweise aus ungehärtetem Stahl und wird hart auf die Spitze des Bohrrüssels aufgelötet. Durch die Hartlötung bei der Verbindung von Werkzeug und Bohrrüssel besteht die Gefahr, daß sich das Werkzeug bei der Wärmebehandung Verformt und damit unbrauchbar wird. Zudem muß die gelötete Stelle zur Vermeidung von dämpfenden Schallstreuungen nach dem Einlöten und beim Werkzeugwechgel geglättet werden, wodurch der Bohrrüssel an der Spitze frühzeitig Verschleißt und ersetzt werden muß. Ein Werkzeugwechsel ist durch den Lötvorgang, der je nach Art des für Bohrrüssel und Werkzeug Verwendeten Materials unter Umständen als Vakuumlötung durchgeführt werden muß, aufwendig und durch die Erwärmung und die erforderliche Nachbehandlung Verschleißfördernd. Dies gilt in besonderem Maß für die erfindungsgemäße Bohrplatte, die dadurch erst nach dem Auflöten mit den Durchgagslöchern Versehen werden könnte, was mit beträchtlichen Schwierigkeiten bei der genauen Ausrichtung der Löcher Verbunden ist.

Eine besonders Vorteilhafte Ausführunsform der Erfindung sieht daher Vor, daß das Werkzeug eine auer zur Schallausbreitungsrichtung ( = Bohrrichtung) plan gearbeitete Fläche aufweist, die an einer ebenso plan gearbeiteten Fläche an der Spitze des Bohrrüssels aniegt, und daß das Werkzeug mit Hilfe mechwischer Befestigungsmittel lösbar an der Spitze des Bgohrrüssels befestigt ist (FIG. 3).

Die planen Flächen am Werkzeug und an der Spitz e des Bohrrüssels quer zur Schallausbreitungsrichtung, also quer zur Längsachse des Bohrrüssels, sind mit gebräuchlichen Beabeitungsmethoden leicht und präzise herzustellen. Über derartige plan Flächen und Gegenflächen ist auch ein gleichmäßiger und guter Kontakt zwischen Bohrrüssel und Werkzeug, der für eine homogene Schallübertragung erforderlich ist, gesichert.

Da das Werkzeug mit Hilfe mechanischer Befestigungsmittel am Bohrrüssel lösbar befestigt ist, entfällt die Notwendigkeit einer Wärmebehandlung, wodurch die Gefahr einer Verofmung des metallischen Werkzeugs nicht gegeben ist. Die mechanischen Befestigungsmittel können sowohl als gesonderte Teile vorliegen, als auch in der Form des Werkzeugs und des Bohrrüssels (beispielsweise als Gewinde und Gegengewinde) integriert sein. Die plan Flächen an Bohrrüssel und Werkzeug bleiben unverändert und mit hoher Genauigkeit erhalten. Dadurch ist auch bei Werkzeugwechsel immer eine genaue Ausrichtung gewühleistet, ohne daß jeweils das Werkzeug mit viel Aufwand neu ausgerichtet werden muß. Die Befestigung des Werkzeugs an der Spitze des Bohrrüssels erfolgt vorteilhafterwei se durch eine Überwurfmutter. Diese sollte möglichst eine geringe Masse aufweisen, da mit zunehmender schwingender Masse an der Rüsselspitze die Schwingungsamplitude abnimmt. Besonders geeignet ist im Hinblick auf Gewicht und Stabilität Titan oder eine Titanlegierung als Material fü die Überwurfmutter. Besonders Vorteilhaft ist eine Ausführungsform, bei der die sich gegenseitig berürenden Flächen von Werkzeug und Überwurfmutter konisch ausgebildet sind. Dies gewährleistet eine gute Flächenberührung zwischen Werkzeug und Mutter und dadurch einen gleichmäßigen Anpreßdruck des Werkzeugs an den Bohrrüssel auf der gesamten planen Fläche. Zudem wird durch die konische Ausfürunge eine Selbstzentrierung des Werkzeugs beim Festziehen erreicht.

Vorteilhafterweise wird die Schleifmittelsuspension durch den dazu ausgebohrten Bohrrüssel über einen seitlich herausführenden Kanal 4 in Verbindung mit einem Absaugstutzen abgesaugt. Die Absaugung Von Scheifmittelsuspension durch den Bohrrüssel ist auch bei derzeit käuflichen Geräten bereits bekannt und hat den Vorteil, daß der ganze Bereich der Arbeitsfläche ständig neu mit Schleitmittel Versorgt wird und dabei die gesamte. Arbeitsfläche gleichmäßig Von der Suspension umspült wird. Gegenüber der Werkzeugbearbeitung ohne Absaugen, bei welcher die Angriffsfläche des Werkzeugs wahrend des Arbeitsprozesses mehr und mehr an frischem Schleifmittel Verarmt, steigert das Bohren mit Absaugen der Suspension sowohl die Bearbeitungsgeschwindigkeit als auch die Genauigkeit beträchtlich.

Der in FIG. 3 dargestellte Bohrrüssel 1 ist in Kegelform ausgeführt. Die Vom nicht eingezeichneten Schallgenerator erzeugte Ultraschallenergie breitet sich in Richtung der Rüsselachse aus und wird über die quer zur Rüsselachse plan bearbeitete Fläche 8 der Rüsselspitze und die Gegenfläche 9 des Werkzeugs 2 auf dieses übergekoppelt. Das Werkzeug wird durch die Überwurfmutter gegen die Rüsselspitze gepreßt und dabei durch die konisch gearbeiteten Flächen 10 bzw. 11 a Werkzeug bzw. Überwurfmutter zentriert (FIG. 1). Gemäß der Erfindung ist der Bohrrüssel innen hohl in der Form eines sich zur Rüsselspitze hin erweiternden Innenkonus 7. Hierdurch ergibt sich auf Vorteilhafte Weise der Freiraum hinter der Bohrplatte, so daß das Werkzeug 2 insgesamt sehr nach gehalten werden kann, was sich günstig auf die Stabilität und insbesondere auf die Übertragung der Schallenergie zur Bohrplatte auswirkt. Zudem wird das Amplitudentransformationsvernältnis Vom schallgeneratorseitigen Ende des Rüssels zur Rüsselspitze vergrößert, da dieses Transformationsverhältnis mit abnehmendem Querschnitt der Rüsselspitze zunimmt. Die konische Ausbildung vermeidet - gegenüber einem beliebig geformten Hohlraum - weitgehend Amplitudenstreuungen, die dämpfend wirken.

Eine günstige Weiterbildung sieht vor, im Bereich des Innenkonus 7 koaxial zur Längsachse des Rüssels ein Absaugrohr 6 zum Absaugen der Schleifmittelsuspension anzubringen, welches von der Innenkonusspitze in Richtung Rüsselspitze geht. Hierdurch wird die amplitudendämpfende Wirkung der Schleifmittelsuspension im Innenkonus verringert, da der Spiegel der Suspension im Bohrrüssel nur noch bis zum Anfang des Absaugrohrs reicht. Besonders günstig ist die Absaugung des Schleifmittels mit Hilfe einer Schlauchpumpe, die eine pulsierende. Förderung des Schleifmittels bewirkt. Dies erweist sich als vorteilhaft für die Bearbeitungsgeschwindigkeit.

Bei bekannten Ultraschallbohreinrichtungen wird zum Absaugen der Schleifmittelsuspension mittels einer Vakuumpumpe an der Arbeitsstelle Unterdruck erzeugt. Auf der Vakuumseite ist ein Auffangbehälter zwischengeschaltet. der die abgesaugte Schleifmittelsuspension sammelt und sich periodisch in gewissen Abständen in ein Vorratsgefäß, aus dem die Suspension mittels einer weiteren Pumpe wieder der Arbeitsstelle zugeführt wird, entleert. Zum Entleeren muß der Auffangbehälter belüftet und der Absaugvorgang unterbrochen werden.

Demgegenüber erbringt die Verwendung einer Schlauchpumpe eine ganze Reihe vorteilhafter Eigenschaften für die Ultraschallbohrvorrichtung.

Das Absaugen und Zuführen des Schleifmittels kann durch dieselbe Pumpe erfolgen. Im einfachsten Fall bestehen Absaugleitung 21 und Zuführleitung 22 aus einem zusammenhängenden, durch die Schlauchpumpe 18 geführten Schlauch. Die dabei im Umlauf befindliche Menge an Schleifmittelsuspension 23 ist sehr gering im Vergleich zu der bekannten Anordnung, was sich günstig auf die Betriebskosten auswirkt. Bei einem Wechsel des Schleifmittels braucht lediglich der Förderschlauch und gegebenenfalls ein Vor-ratsgefäß ausgetauscht zu werden. Ein Vorratsgefäß ist insofern günstig, als die nur im Schlauch befindliche Suspensionsmenge unter Umständen eine ständige Bedeckung der Bearbeitungsfläche nicht immer gewährleistet. Die pulsierende Förderung der Suspension durch die Schlauchpumpe begegnet auch wirkungsvoll einer etwaigen Sedimentation des Schleifmittels aus der Suspension.

Für eine Anordnung mit nach unten weisender Bohrrichtung ist vorteilhafterweise die Aufnahme 19 für das Werkstück behälterartig ausgeführt und das Werkstück 15 bis über die Bearbeitungsfläche mit Suspension bedeckt. Der Aufnahmebehälter fungiert dabei gleichzeitig als Vorratsgefäß.

Eine andere günstige Ausführungsform sieht ein getrenntes Vorratsgefäß 19 vor, dem die abgesaugte Suspension über die Schlauchpumpe zugeführt wird und aus dem die Suspension wieder an die Arbeitsstelle gefördert wird. Für die Absaugung und die Rückführung an die Arbeitsstelle ist vorzugsweise eine einzige Mehrfachschlauchpumpe 18 vorgesehen.

Über eine weitere Schlauchverbindung kann vorteilhafterweise auch noch eine Vorrichtung zur Reinigung der Schleifmittelsuspension von abgetragenen Werkstückpartikeln oder dergleichen in den Schleifmittelkreislauf einbezogen sein. Gemäß einer weiteren günstigen Ausführungsform sind Vorratsbehälter und Reinigungsvorrichtung zu einer Einheit 20 zusammengefaßt.

Durch die Verwendung einer Schlauchpumpe entfällt der Aufwand. der bei der bekannten Anordnung durch das Aufrechterhalten eines Vakuums notwendig wird. Auch ist keine Unterbrechung des Arbeitsgangs zur Leerung eines Zwischenbehälters erforderlich.

Ein wesentlicher Vorteil der Schlauchpumpe ist, daß die Pumpe mit der Schleifmittelsuspenion. vor allem mit den Schleifmittelkörnern, überhaupt nicht in Kontakt kommt. Die einzigen wesentlichen Verschleißteile im Pumpkreislauf sind daher die Schleifmittelsuspenion führenden Schläuche. Bei einem Wechsel der Schleifmittelsuspension kann die Pumpe unverändert übernommen werden, da keine Reinigung notwendig ist und die Anordnung für beliebige Schleifmittelkörnungen eingesetzt werden kann. So können mittels mehrerer paralleler Förderleitungen auch getrennte Schleifmittelkreisläufe gleichzeitig betrieben werden.

Eine vorteilhafte Ausführung sieht eine hermetisch abgeschlossene Umwälzung der Schleifmittelsuspension vor. Dies kann besonders dann Bedeutung erlangen, wenn z. B. Schleifmittelsuspension und/oder Werkstück agressive, leichtflüchtige oder giftige Bestandteile enthalten oder in einer abgeschlossenen Schutzatmosphäre zu handhaben sind. Mit einer Vakuumpumpe ist dies nicht möglich. Genannte Einrichtungen, wie beispielsweise eine Reinigungsvorrichtung können dabei ohne generelle Einschränkung mitbetrieben werden.

Schließlich ist auch noch auf den durch nur eine, zudem einfach aufgebaute Pumpe und durch das geringe Schleifmittelsuspensionsvolumen geringen Platzbedarf der Anordnung hinzuweisen-

## Patentansprüche

1. Verfahren zur Herstellung zylindrischer Körper aus einem auf einem Trägerkörper (16) befestigten Werkstück (15) durch Ultraschallbohren mit einer Sohrplatte (2), die eine Mehrzahl in Bohrrichtung ausgerichteter zylindrischer Durchgangslöcher (13) aufweist, insbesondere zur Herstellung sehr kleiner Ferritkörper mit im Verhältnis zu ihrer Länge kleinen Querabmessungen, dadurch gekennzeichuiet, daß die Bohrplatte (2) beim Bohren mit der gesamten Länge der zylindrischen Durchgangslöcher (13) über das ganze Werkstück (15) gefahren und vollständig in den Trägerkörper (16) eingebohrt wird (FIG. 2).

2. Verfahren nach Anspruch 1, dadurch gekennzeichnet, daß mit konstanter Vorschubgeschwindigkeit gebohrt wird.

3. Verfahren nach Anspruch 1 oder Anspruch 2, dadurch gekennzeichnet, daß die Schleifmittelsuspension der Arbeitsfläche ständig neu zugeführt und von dieser durch das Werkzeug hindurch abgesaugt wird.

4. Ultraschallbohrvorrichtung mit einem Sohrrüssel (1) zur Übertragung der Schallenergi von einem Schallgenerator zu einer an der Spitze des Sohrrüssels angeordneten Sohrplatte (2), die eine Mehrzahl in Sohrrichtung ausgerichteter zylindrischer Durchgangslöcher (13) aufweist, dadurch gekennzeichnet, daß der Sohrrüssel (1) innen hohl ist in der Form eines sich zur Rüsselspitze hin erweiternden Innenkonus (7).

5. Ultraschallbohrvorrichtung nach Anspruch 4, dadurch gekennzeichnet, daß das Werkzeug (2) mit Hilfe mechanischer Sefestigungsmittel (3) lösbar an der Spitze des Sohrrüssels (1) befestigt ist und eine quer zur Schallausbreitungsrichtung (= Sohrrichtung) plan gearbeitete Fläche aufweist, die an einer ebenso plan gearbeiteten Gegenfläche an der Spitze des Sohrrüssels anliegt.

6. Ultraschallbohrvorrichtung nach Anspruch 5, dadurch gekennzeichnet, daß das Werkzeug (2) durch eine Überwurfmutter (3) mit geringer Masse am Sohrrüssel lösbar befestigt ist.

7. Ultraschallbohrvorrichtung nach Anspruch 6, dadurch gekennzeichnet, daß das Werkzeug und die Überwurfmutter im Sereich ihrer gegenseitigen Serührungsfläche (10, 11) konisch geformt sind.

8. Ultraschallbohrvorrichtung nach einem der Ansprüche 4 bis 7, dadurch gekennzeichnet, daß die Schleifmittelsuspension durch den Sohrrüssel (1) über einen seitlich herausführenden Kanal (4) mit Anschlußstutzen (5) abgesaugt wird.

9. Ultraschallbohrvorrichtung nach Anspruch 8, dadurch gekennzeichnet, daß im Sohrrüssel (1) im Sereich des Innenkonus (7) koaxial zu diesem von der Konusspitze in Richtung Rüsselspitze ein Rohr zum Absaugen der Schleifmittelsuspension angeordnet ist.

10. Ultraschallbohrvorrichtung nach Anspruch 8 oder 9, dadurch gekennzeichnet, daß zum Absaugen der Schleifmittelsuspension durch den Sohrrüssel (1) eine Schlauchpumpe an den Absaugstutzen (5) angeschlossen ist.

11. Ultraschallbohrvorrichtung nach Anspruch 10, dadurch gekennzeichnet, daß im Pumpkreislauf ein Vorratsbehälter für die Schleifmittelsuspension vorhanden ist.

12. Ultraschallbohrvorrichtung nach Anspruch 11, dadurch gekennzeichnet, daß die Aufnahme für das Werkstück behälterartig ausgeführt und als Vorratsbehälter eingesetzt ist, wobei das Werkstück bis über die Searbeitungsfläche mit Schleifmittelsuspension bedeckt ist.

13. Ultraschallbohrvorrichtung nach einem der Ansprüche 10 bis 12, dadurch gekennzeichnet, daß im pumpkreislauf eine Vorrichtung zur Reinigung der Schleifmittelsuspension angeordnet ist.

14. Ultraschallbohrvorrichtung nach einem der Ansprüche 10 bis 13, dadurch gekennzeichnet, daß eine Mehrfachschlauchpumpe mit mehreren parallelen Förderleitungen vorgesehen ist.

15. Ultraschallbohrvorrichtung nach einem der Ansprüche 10 bis 14, dadurch gekennzeichnet, daß der Schleifmittelsuspension-Kreislauf hermetisch abgeschlossen ist.


## Claims

1. Method for the production of cylindrical bodies from a workpiece (15), which is fastened on a carrier body (16), by ultrasonic drilling with a drill plate (2), which displays a plurality of cylindrical passage holes (13) oriented in direction of drilling, particularly for the production of very small ferrite bodies with transverse dimensions which are small in relation to their length, characterised thereby, that the drill plate (2) is during drilling driven over the entire workpiece (15) by the total length of the cylindrical passage holes (13) and drilled completely into the carrier body (16) (Fig. 2).

2. Method according to claim 1, characterised thereby, that drilling is done at constant speed of advance.

3. Method according to claim 1 or claim 2, characterised thereby, that the grinding medium suspension is constantly fed anew to the work surface and sucked away from this through the tool.

4. Ultrasonic drilling device with a drill nozzle (1) for the transmission of the sound energy from a sound generator to a drill plate (2), which is arranged at the tip of the drill nozzle and displays a plurality of cylindrical passage holes (13) oriented in direction of drilling, characterised thereby, that the drill nozzle (1) is hollow internally in the shape of an internal cone widening towards the tip of the nozzle.

5. Ultrasonic drilling device according to claim 4, characterised thereby, that the tool (2) is detachably fastened at the tip of the drill nozzle (1) with the aid of mechanical fastening means (3) and displays a surface which is made planar transvsrsely to the direction of sound propagation (= direction of drilling) and rests against a countersurface equelly made planar at the tip of the drill nozzle.

6. Ultrasonic drilling device according to claim 5, characterised thereby, that the tool (2) is detachably fastened at the drill nozzle by a box nut (3) of low mass.

7. Ultrasonic drilling device according to claim 6, characterised thereby, that the tool and the box nut are conically shaped in the region of their mutual contact area (10, 11).

8. Ultrasonic drilling device according to one of the claims 4 to 7, characterised thereby, that the grinding medium suspension is sucked away through the drill nozzle (1) by way of a channel (4) leading out laterally and having a connecting stub (5).

9. Ultrasonic drilling device according to claim B, characterised thereby, that a pipe for the sucking-away of the grinding medium suspension is arranged in the drill nozzle (1) in the region of the internal cone (7) co-axially therewith from the point of the cone in the direction of the tip of the nozzle.

10. Ultrasonic drilling device according to claim 8 or 9, characterised thereby, that a hose pump is connected to the exhaust stub (5) for the sucking-away of the grinding medium suspension through the drill nozzle (1).

11. Ultrasonic drilling device according to claim 10, characterised thereby, that a supply container for the grinding medium suspension is present in the pump circuit.

12. Ultrasonic drilling device according to claim 11, characterised thereby, that the receptacle for the workpiece is constructed like a container and used as supply container, wherein the workpiece is covered by the grinding medium suspension up to over the processing surface.

13. Ultrasonic drilling device according to one of the claims 10 to 12, characterised thereby, that a device for the cleaning of the grinding medium suspension is arranged in the pump circuit.

14. Ultrasonic drilling device according to one of the claims 10 to 13, characterised thereby, that a multiple hose pump with several parallel conveying ducts is provided.

15. Ultrasonic drilling device according to one of the claims 10 to 14, characterised thereby, that the grinding medium suspension circuit is closed off hermetically.


## Revendications

1- Procédé de fabrication de corps cylindriques à partir d'une pièce (15) fixée sur un corps support (16), par perçage aux ultrasons au moyen d'une plaque perceuse (2) qui présente une pluralité de trous traversants cylindriques (13) orientés dans la direction du perçage, en particulier, pour la fabrication de très petites pièces de ferrite possédant des dimensions transversales petites comparativement à leur longueur, caractérisé en ce que, pendant le perçage, on fait avancer la plaque perceuse de manière que toute la longueur des trous traversants cylindriques (13) traverse toute la pièce (15) et pénètre entierement dans le corps support (16) (figure 2).

2 - Procédé selon la revendication 1, caractérisé en ce qu'on perce avec une vitesse d'avance constante.

3 - Procédé selon la revendication 1 ou la revendication 2, caractérisé en ce que la suspension d'abrasif est constamment renouvelée à la surface de travail et constamment aspirée à partir de cette surface, en traversant l'outil.

4 - Dispositif de perçage aux ultrasons comprenant une tête de perçage (1) servant à transmettre l'énergie ultrasonore d'un générateur d'ultrasons à une plaque perceuse (2) disposée à la pointe de la tête de perçage et qui présente une pluralité de trous traversants cylindriques (13) orientés dans la direction du perçage, caractérisé en ce que la tete de perçage (1) est creuse intérieurement, avec la forme d'un cône intérieur (7) qui s'élargit vers la pointe de la tête.

5 - Dispositif de perçage aux ultrasons selon la revendication 4, caractérisé en ce que l'outil (2) est fixé de façon amovible à la pointe de la tête de perçage (1) à l'aide de moyens de fixation mécaniques (3) et présente une surface planée transversalement à la direction de propagation des ultrasons (= direction du perçage) et qui est appuyée contre une contre-surface également planée prévue à la pointe de la tête de perçage.

6 - Dispositif de perçage aux ultrasons selon la revendication 5, caractérisé en ce que l'outil (2) est fixé de façon amovible à la tête de perçage par un écrou d'accouplement (3) de faible masse.

7 - Dispositif de perçage aux ultrasons selon la revendication 6, caractérisé en ce que l'outil et l'écrou d'accouplement présentent une forme conique dans la région de leurs surfaces de contact mutuel (10, 11).

8 - Dispositif de perçage aux ultrasons selon l'une des revendications 4 à 7, caractérisé en ce que la suspension d'abrasif est aspirée à travers la tete de perçage (1), par l'intermédiaire d'un canal (4) qui sort latéralement et est muni d'un embout de raccordement (5).

9 - Dispositif de perçage aux ultrasons selon la revendication 8, caractérisé en ce qu'un tube destiné à aspirer la suspension d'abrasif est disposé dans la tête de perçage (1), dans la région du cône creux (7), coaxialement à ce cône et en se dirigeant de la pointe du cône vers la pointe de la tête.

10 - Dispositif de perçage aux ultrasons selon la revendication 8 ou la revendication 9, caractérisé en ce que, pour aspirer la suspension d'abrasif à travers la tête de perçage (1), une pompe tubulaire est raccordée à l'embout d'aspiration (5).

11 - Dispositif de perçage aux ultrasons selon la revendication 10, caractérisé en ce qu'un réservoir dans le circuit de la pompe.

12 - Dispositif de perçage aux ultrasons selon la revendication 11, caractérisé en ce que le support recevant la pièce est réalisé sous la forme d'une cuvette et utilisé comme réservoir, la pièce étant recouverte de suspension d'abrasif jusqu'au-dessus de la surface d'usinage.

13 - Dispositif de perçage aux ultrasons selon l'une des revendications 10 à 12, caractérisé en ce qu'un dispositif destiné au nettoyage de la suspension d'abrasif est intercalé dans le circuit de la pompe.

14 - Dispositif de perçage aux ultrasons selon l'une des revendications 10 à 13, caractérisé en ce qu'il comprend une pompe tubulaire multiple comportant plusieurs conduites de transport parallèles.

15 - Dispositif de perçage aux ultrasons selon l'une des revendications 10 à 14, caractérisé en ce que le circuit de suspension d'abrasif est hermétiquement fermé.

FIG.1

FIG.2

FIG.3

FIG.4